# EUROPEAN PATENT APPLICATION

(11) **EP 4 474 764 A1**
(43) Date of publication of application: **11.12.2024**
(21) Application number: 23788101.6
(22) Date of filing: 13.03.2023
(51) Int. Cl.: G01B 11/25, G01B 11/06

(54) **SURFACE SHAPE MEASUREMENT DEVICE, SURFACE SHAPE MEASUREMENT METHOD, AND BELT MANAGEMENT METHOD**

(30) Priority: 11.04.2022 JP 2022065346
(71) Applicant: JFE Steel Corporation, Tokyo 100-0011 (JP)
(72) Inventor: NISHINA Yoshiaki, Tokyo 100-0011 (JP); YAMAHIRA Naoshi, Tokyo 100-0011 (JP); ENOEDA Seiji, Tokyo 100-0011 (JP)
(74) Representative: Hoffmann Eitle
(86) International application number: PCT/JP2023/009732
(87) International publication number: WO 2023/199679

(57) **Abstract**

Provided are a surface shape measurement apparatus, a surface shape measurement method, and a belt management method that accurately measure the thickness of a belt. A surface shape measurement apparatus (10) is a surface shape measurement apparatus for measuring a surface shape of a belt wound around a pulley and includes a belt surface measurement apparatus (11) and a control unit (15). The belt surface measurement apparatus (11) measures a surface position of the belt and a surface position of the pulley at a section at which the belt contacts the pulley. The control unit (15) corrects the surface position of the belt based on the measured surface position of the pulley and calculates the surface shape of the belt.

## Description

### TECHNICAL FIELD

The present disclosure relates to a surface shape measurement apparatus, a surface shape measurement method, and a belt management method. The present disclosure relates in particular to a surface shape measurement apparatus, a surface shape measurement method, and a belt management method that measure the surface shape of a belt wound around a pulley.

### BACKGROUND

A belt conveyor equipped with a conveyor belt wound around a pair of pulleys as drive means, for example, is known as a conveyor apparatus for conveying materials such as raw materials. In a belt conveyor, the thickness of the conveyor belt needs to be controlled to prevent the conveyor belt from breaking.

Here, Patent Literature (PTL) 1 and 2, for example, disclose an apparatus and system for measuring the surface roughness of a conveyor belt by an optical cutting method using a line laser.

### CITATION LIST

### Patent Literature

PTL 1: JP 2017-32346 A
PTL 2: JP 2020-76767 A

### SUMMARY

### (Technical Problem)

In the technology of PTL 1, the unevenness of the conveyor belt is measured at a distance from the pulleys, which tends to make the conveyor belt unstable, such as by swinging up and down. This makes it difficult to improve the measurement accuracy of the unevenness of the conveyor belt. On the other hand, the technology in PTL 2 measures the unevenness of the conveyor belt at a section at which the conveyor belt contacts the pulley. However, if the pulley around which the conveyor belt is wound is eccentric or inclined, the thickness of the conveyor belt cannot be accurately measured.

In light of these problems, it is an aim of the present disclosure to provide a surface shape measurement apparatus, a surface shape measurement method, and a belt management method that accurately measure the thickness of a belt.

### (Solution to Problem)

(1) A surface shape measurement apparatus according to an embodiment of the present disclosure is
   a surface shape measurement apparatus for measuring a surface shape of a belt wound around a pulley, the surface shape measurement apparatus including:
   a belt surface measurement apparatus configured to measure a surface position of the belt and a surface position of the pulley at a section at which the belt contacts the pulley; and
   a control unit configured to correct the surface position of the belt based on the measured surface position of the pulley and calculate the surface shape of the belt.
(2) As an embodiment of the present disclosure, in (1),
   the belt surface measurement apparatus is configured to measure surface positions of both widthwise ends of the pulley, the widthwise ends being exposed from respective widthwise edges of the belt, and
   the control unit is configured to estimate a surface position of a portion of the pulley other than the widthwise ends of the pulley from the surface positions of both widthwise ends of the pulley and correct the surface position of the belt based on the estimated surface position of the pulley.
(3) As an embodiment of the present disclosure, in (1) or (2),
   the belt surface measurement apparatus is configured to measure a surface position of at least a total length of the belt in a conveyance direction.
(4) As an embodiment of the present disclosure, in any one of (1) to (3),
   the control unit is configured to estimate an inclination of the pulley in a width direction from the surface position of the pulley and correct the surface position of the belt based on the inclination.
(5) As an embodiment of the present disclosure, in any one of (1) to (4),
   the control unit is configured to estimate an eccentricity of the pulley in a circumferential direction from the surface position of the pulley and correct the surface position of the belt based on the eccentricity.
(6) A surface shape measurement method according to an embodiment of the present disclosure is
   a surface shape measurement method for measuring a surface shape of a belt wound around a pulley, the surface shape measurement method including:
   measuring a surface position of the belt and a surface position of the pulley at a section at which the belt contacts the pulley; and
   correcting the surface position of the belt based on the measured surface position of the pulley and calculating the surface shape of the belt.
(7) A belt management method according to an embodiment of the present disclosure includes
   managing a belt based on a surface shape of the belt calculated by the surface shape measurement method of (6).

### (Advantageous Effect)

According to the present disclosure, a surface shape measurement apparatus, a surface shape measurement method, and a belt management method that accurately measure the thickness of a belt can be provided.

### BRIEF DESCRIPTION OF THE DRAWINGS

In the accompanying drawings:
FIG. 1 is a diagram illustrating an example configuration of a surface shape measurement apparatus according to an embodiment;
FIG. 2 is a diagram illustrating measurement of the surface shape (surface position) of a conveyor belt by a belt surface measurement apparatus;
FIG. 3A is a diagram illustrating the effect of inclination and eccentricity of a pulley on surface shape data of the conveyor belt;
FIG. 3B is a diagram illustrating the effect of inclination and eccentricity of the pulley on surface shape data of the conveyor belt;
FIG. 4 is a flowchart illustrating an example of a surface shape measurement method according to an embodiment;
FIG. 5A is a diagram illustrating a method to correct for the effect of inclination of the pulley;
FIG. 5B is a diagram illustrating a method to correct for the effect of inclination of the pulley;
FIG. 6A is a diagram illustrating a method to correct for the effect of eccentricity of the pulley; and
FIG. 6B is a diagram illustrating a method to correct for the effect of eccentricity of the pulley.

### DETAILED DESCRIPTION

A surface shape measurement apparatus, a surface shape measurement method, and a belt management method according to an embodiment of the present disclosure will be described below with reference to the drawings. In each figure, identical or equivalent parts are marked with the same symbol. In the description of the present embodiment, a description of identical or equivalent parts will be omitted or simplified as appropriate.

### <Surface Shape Measurement Apparatus>

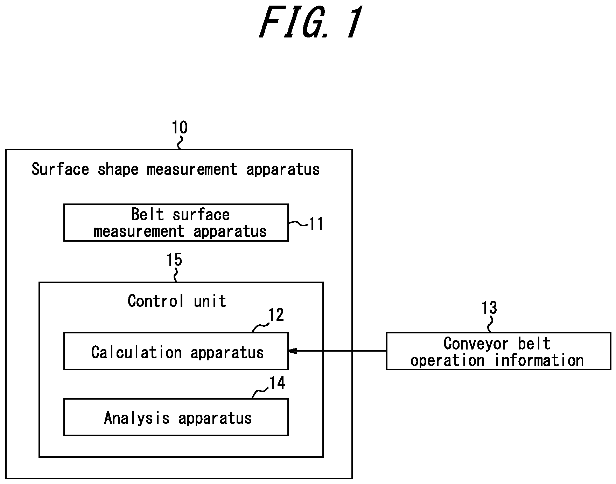

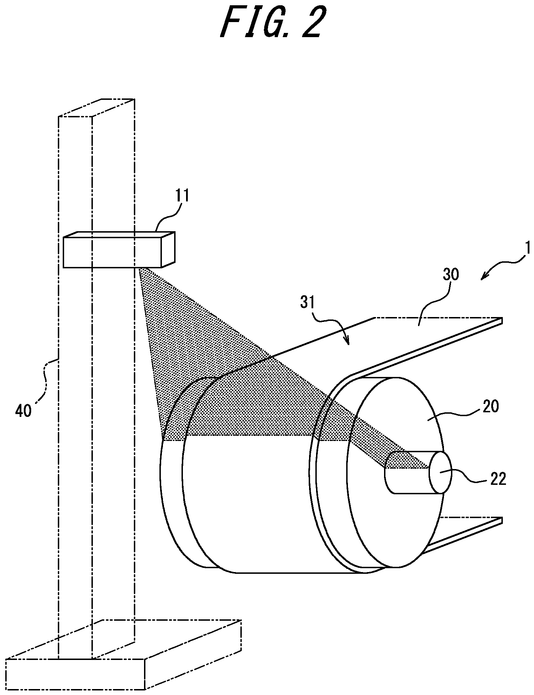

FIG. 1 illustrates an example of the configuration of a surface shape measurement apparatus 10. FIG. 2 illustrates the measurement of the surface shape of a conveyor belt 30 of a belt conveyor 1 by a belt surface measurement apparatus 11 of the surface shape measurement apparatus 10. The surface shape measurement apparatus 10 measures the surface shape of the conveyor belt 30 wound around a pulley 20, as illustrated in FIG. 2. Here, the pulley 20 is an example of drive means. The conveyor belt 30 is an example of a belt. The surface shape measurement apparatus 10 is an apparatus that measures the surface shape of a belt driven in a travel direction by drive means. The belt is not limited to the conveyor belt 30, but in the present embodiment, the belt is described as being the conveyor belt 30 driven by the pulley 20. Here, the travel direction is the direction in which the belt moves as a result of the driving force from the drive means. In the present embodiment, the travel direction is also referred to as the conveyance direction. The conveyance direction is the direction in which the conveyed material loaded on a surface 31 of the operating conveyor belt 30 moves.

In the belt conveyor 1, the thickness of the conveyor belt 30 needs to be controlled to prevent the conveyor belt 30 from breaking. The thickness of the conveyor belt 30 can be calculated and managed from the surface shape measured by the surface shape measurement apparatus 10. If the surface shape can be accurately measured, the thickness of the conveyor belt 30 can be accurately obtained by calculation. The surface shape is the shape, including unevenness, of the surface 31 of the conveyor belt 30. For example, an area, on the surface 31 of the conveyor belt 30, that is recessed compared to the surroundings can indicate that the conveyor belt 30 is thinner at that area than the surroundings.

As illustrated in FIG. 1, the surface shape measurement apparatus 10 according to the present embodiment includes the belt surface measurement apparatus 11 and a control unit 15. The control unit 15 includes a calculation apparatus 12 and an analysis apparatus 14. The surface shape measurement apparatus 10 is an apparatus that measures the surface shape of the conveyor belt 30 by the belt surface measurement apparatus 11, the calculation apparatus 12, and the analysis apparatus 14 operating in coordination. The calculation apparatus 12 obtains conveyor belt operating information 13 as needed. The conveyor belt operation information 13 is information about the operation and condition of the conveyor belt 30 and is, for example, obtained from a control unit of the belt conveyor 1. The belt surface measurement apparatus 11 and the control unit 15 may be connected by a network, such as a local area network (LAN), to transmit and receive information (measurement data) obtained by measurement. The control unit of the belt conveyor 1 may also be connected by a network, such as the same LAN. Details on the components of the surface shape measurement apparatus 10 are described below.

As illustrated in FIG. 2, the conveyor belt 30, which is the measurement target of the surface shape measurement apparatus 10, is wound around the pulley 20. When the pulley 20 rotates, the conveyor belt 30 moves and can convey objects placed on the surface 31 of the conveyor belt 30. The surface 31 of the conveyor belt 30 is the opposite side (outer side) of the conveyor belt 30 from the side by the pulley 20 (inner side).

### <Belt Surface Measurement Apparatus>

As illustrated in FIG. 2, the belt surface measurement apparatus 11 measures the surface shape of the conveyor belt 30 and the pulley 20. The belt surface measurement apparatus 11 can identify the surface position of the conveyor belt 30 and the pulley 20 by measurement. In other words, local information on the surface shape can be considered to be the surface position. For this reason, the measurement by the belt surface measurement apparatus 11 is also referred to below as "measuring the surface position". The belt surface measurement apparatus 11 can simultaneously measure the surface position of the conveyor belt 30 and the surface position of the pulley 20 at a section at which the conveyor belt 30 contacts the pulley 20. In the present embodiment, the belt surface measurement apparatus 11 is a non-contact measurement apparatus that measures the surface position of the conveyor belt 30 and the pulley 20 in a non-contact state with respect to the conveyor belt 30 and the pulley 20. The belt surface measurement apparatus 11 performs measurements while the pulley 20 and the conveyor belt 30 are rotating. The belt surface measurement apparatus 11 preferably measures the surface position of at least the total length of the conveyor belt 30 in the conveyance direction.

In the present embodiment, the belt surface measurement apparatus 11 is an apparatus based on a laser light cutting system, such as an optical cutting shape meter. The belt surface measurement apparatus 11 can measure the surface position of the total length of the conveyor belt 30 in the width direction by irradiating the conveyor belt 30 and the pulley 20 with a line laser beam. The belt surface measurement apparatus 11 can measure surface positions of both widthwise ends of the pulley 20, the widthwise ends being exposed from respective widthwise edges of the conveyor belt 30.

The belt surface measurement apparatus 11 is installed at a position enabling irradiation of a laser beam onto the conveyor belt 30 from diagonally above the pulley 20, so that the surface positions of the conveyor belt 30 and the pulley 20 can be measured simultaneously at the section at which the conveyor belt 30 contacts the pulley 20. The belt surface measurement apparatus 11 may be configured to be held near the pulley 20 by a holding member 40 installed on the ground. In order to accurately measure the thickness direction of the conveyor belt 30, the belt surface measurement apparatus 11 is installed so that the irradiation direction of the laser beam passes through a center 22 of the pulley 20. Since the belt surface measurement apparatus 11 measures the surface position of the conveyor belt 30 at the section in contact with the pulley 20, the conveyor belt 30 does not swing up and down and can be measured in a stable position. The surface position of the conveyor belt 30 and the surface position of the pulley 20 can be measured simultaneously at the same location. Therefore, as compared to a configuration in which the surface positions of the conveyor belt 30 and the pulley 20 are measured separately by two measurement apparatuses, the number of measurement apparatuses can be reduced and the surface position of the conveyor belt 30 can be accurately corrected according to the surface position of the pulley 20.

In this way, the belt surface measurement apparatus 11 can make measurements to obtain information on the surface position of the conveyor belt 30 and information on the surface position of the pulley 20. However, the resulting information on the surface position of the conveyor belt 30 includes the eccentricity and inclination of the pulley 20.

Here, as another configuration example, the belt surface measurement apparatus 11 can be an apparatus that is not based on a laser light cutting system. However, the belt surface measurement apparatus 11 is preferably a non-contact measurement apparatus that can make measurements in a non-contact state with respect to the conveyor belt 30 and the pulley 20, so that the surface position of the conveyor belt 30 and the pulley 20 can be measured while the pulley 20 and the conveyor belt 30 are rotating.

### <Control Unit>

The control unit 15 is configured to include the calculation apparatus 12 and the analysis apparatus 14. The control unit 15 corrects the surface position of the conveyor belt 30 based on the surface position of the pulley 20 measured by the belt surface measurement apparatus 11 and calculates the surface shape of the conveyor belt 30. The control unit 15 may include a processor that performs calculations and a memory that stores data (such as information on surface positions) used in the calculations. The processor can, for example, be a general-purpose processor or a dedicated processor specialized for particular processing, but the processor is not limited to these examples and may be any processor. The memory includes one or more memories. The memories can be any memory, including but not limited to a semiconductor memory, a magnetic memory, or an optical memory. The control unit 15 may, for example, be a computer.

### <Calculation Apparatus>

The calculation apparatus 12 calculates the surface shape of the total length of the conveyor belt 30 in the conveyance direction based on the measurement data, which is information on the surface position from the belt surface measurement apparatus 11, and the conveyor belt operating information 13, which is acquired as necessary. The total length of the conveyor belt 30 in the conveyance direction is sometimes referred to as the total circumference or the total circumferential length. The calculation of the surface shape may include determining the thickness of the conveyor belt 30 and may also include determining the unevenness of the surface 31 of the conveyor belt 30, for example by mapping the unevenness to a two-dimensional map.

### <Analysis Apparatus>

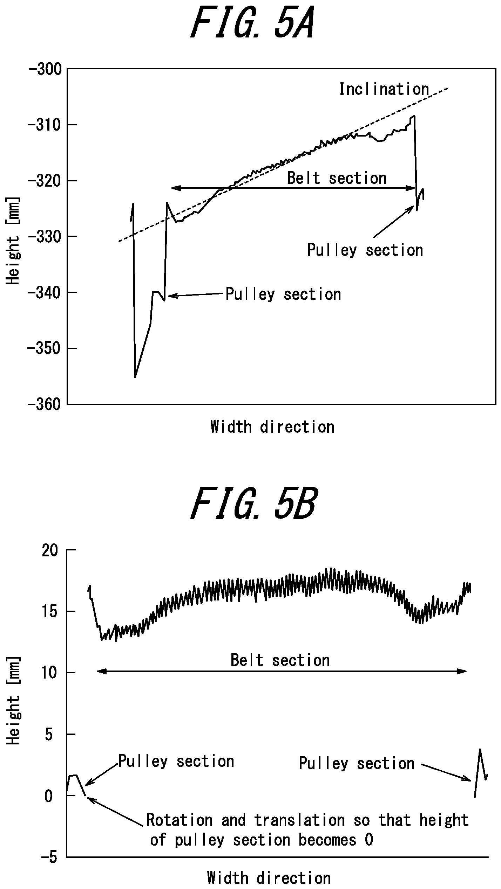

The analysis apparatus 14 is an apparatus for obtaining the precise surface shape of the conveyor belt 30 by removing information on the surface position (eccentricity and inclination) of the pulley 20 from the information on the surface shape of the conveyor belt 30 as calculated by the calculation apparatus 12. Here, the surface position of the pulley 20 that is to be removed is the surface position of the total width (total widthwise length) of the pulley 20. The analysis apparatus 14 estimates the surface position of a portion of the pulley 20 other than the widthwise ends of the pulley 20 (the total widthwise length) from the surface positions of both widthwise ends of the pulley 20 as measured by the belt surface measurement apparatus 11. The analysis apparatus 14 estimates the surface position of the pulley 20 as a linear portion of the pulley 20 in a case in which the positions of both widthwise ends of the pulley 20 are connected by a straight line, as illustrated by the dashed line in FIG. 5A, for example. Here, the analysis apparatus 14 estimates the total widthwise length of the pulley 20 from the measured surface positions of both widthwise ends of the pulley 20 in the present embodiment, but the analysis apparatus 14 may make a partial estimation (discrete estimation) of the pulley 20 in the width direction.

### <Surface Shape Measurement Method>

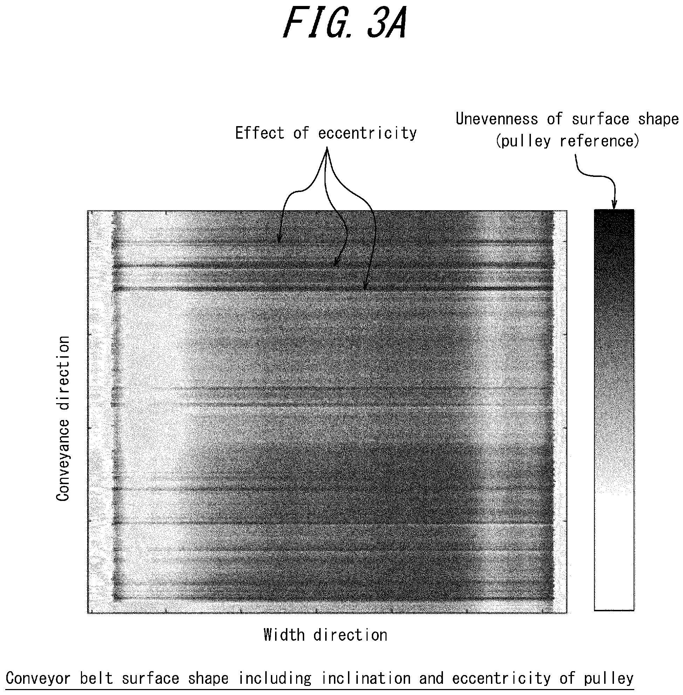

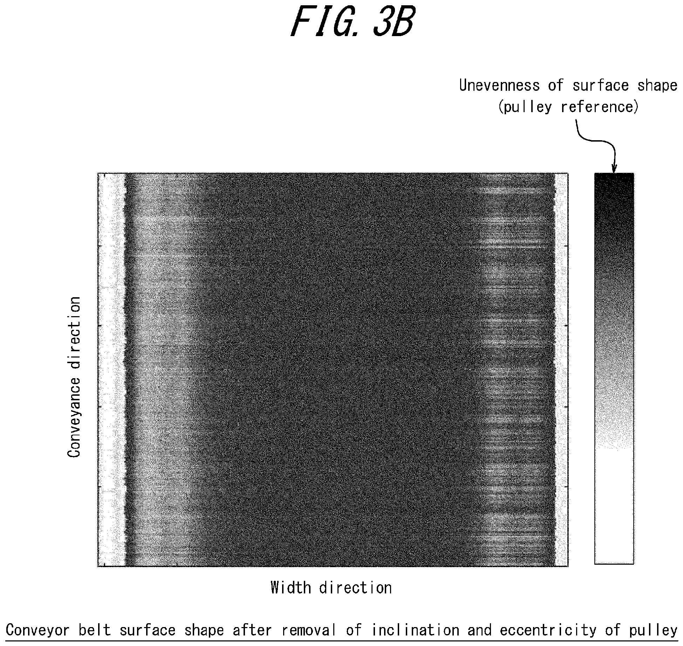

FIGS. 3A and 3B illustrate the surface shapes of the conveyor belt 30 and the pulley 20 as a gray scale for the measurement data obtained by the belt surface measurement apparatus 11. In the present embodiment, the surface position is obtained as the position (hereinafter "height") in the height direction, taking the height direction to be the radial direction from the center 22 of the cylindrical pulley 20. The surface position of the conveyor belt 30 may be described as high in a case of being far from the center 22 and low in a case of being close to the center 22 in the radial direction of the pulley 20. In FIGS. 3A and 3B, black areas, such as near the center in the width direction, indicate a higher surface position than white areas. FIG. 3A is data including the effects of inclination and eccentricity of the pulley 20. For example, due to the effect of eccentricity, black linear areas can be seen along the entire length in the width direction. In addition, a color distribution that is not symmetrical with respect to the width direction is observed. FIG. 3B is data without the effects of inclination and eccentricity of the pulley 20. In FIG. 3B, black linear areas and asymmetric color distribution are not observed. Execution of the correction process described below yields data, on the surface shape of the conveyor belt 30 and the pulley 20, like the data illustrated in FIG. 3B.

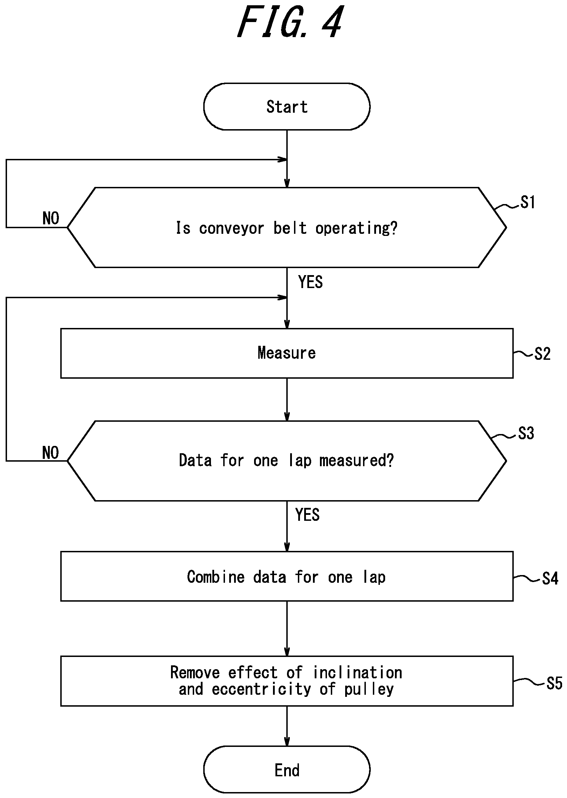

FIG. 4 is a flowchart illustrating an example of a surface shape measurement method executed by the surface shape measurement apparatus 10 according to the present embodiment.

The surface shape measurement apparatus 10 waits in a case of determining, based on a signal obtained from the conveyor belt operation information 13, that the conveyor belt 30 is not in operation (No in step S1). If the conveyor belt 30 is in operation (Yes in step S1), the surface shape measurement apparatus 10 performs measurements using the belt surface measurement apparatus 11 (step S2).

The surface shape measurement apparatus 10 then identifies the position of the conveyor belt 30 in the conveyance direction from the conveyor belt operating information 13 and stores the measurement data measured by the belt surface measurement apparatus 11 in correspondence with the identified position of the conveyor belt 30.

If the surface position of the conveyor belt 30 has not been measured over the total length (one lap) in the conveyance direction (No in step S3), the surface shape measurement apparatus 10 continues the measurement. In a case in which data for one lap of the conveyor belt 30 has been measured (Yes in step S3), the surface shape measurement apparatus 10 combines the data for one lap based on the information on the corresponding position of the conveyor belt 30 in the conveyance direction (step S4). Here, there may be a plurality of points of measurement data at one location. The surface shape measurement apparatus 10 may select any of the measurement data, for example, or may calculate an average or the like and map the post-calculation measurement data to that position.

Here, the surface shape data obtained in step S3 includes the effect of the surface position (inclination and eccentricity) of the pulley 20. Therefore, the surface shape measurement apparatus 10 analyzes the correct surface shape data of the conveyor belt 30 (step S5). The surface shape measurement apparatus 10 corrects the surface position of the conveyor belt 30 based on the surface position (inclination and eccentricity) of the pulley 20 and calculates the surface shape of the conveyor belt 30 from which the effect of the inclination and eccentricity of the pulley 20 has been removed.

FIGS. 5A and 5B are diagrams illustrating a method for correcting for the effect of inclination of the pulley 20. Here, the pulley 20 and the conveyor belt 30 wrapped around the pulley 20 can be distinguished in the width direction because a sharp height difference (step) occurs at both ends (boundaries) of the conveyor belt 30. The pulley section in FIGS. 5A and 5B is the area where the pulley 20 is identified as being exposed. The belt section in FIGS. 5A and 5B is the area where the conveyor belt 30 is determined to be present. FIG. 5A illustrates an example of the surface position (surface shape) of the conveyor belt 30 before correction for inclination as calculated by the control unit 15. The difference in surface position (height) of the two ends of the pulley 20 indicates that the entire pulley is inclined in the width direction. The surface position (surface shape) of the conveyor belt 30 is also inclined due to the effect of inclination of the pulley 20. The control unit 15 corrects for the effect of inclination of the pulley 20 by rotating and translating the surface positions of the conveyor belt 30 and the pulley 20 so that the height of pulley 20 becomes 0 (reference point), as illustrated in FIG. 5B. Here, the inclination of the pulley 20 can be measured (estimated) even while the pulley 20 (conveyor belt 30) is stopped.

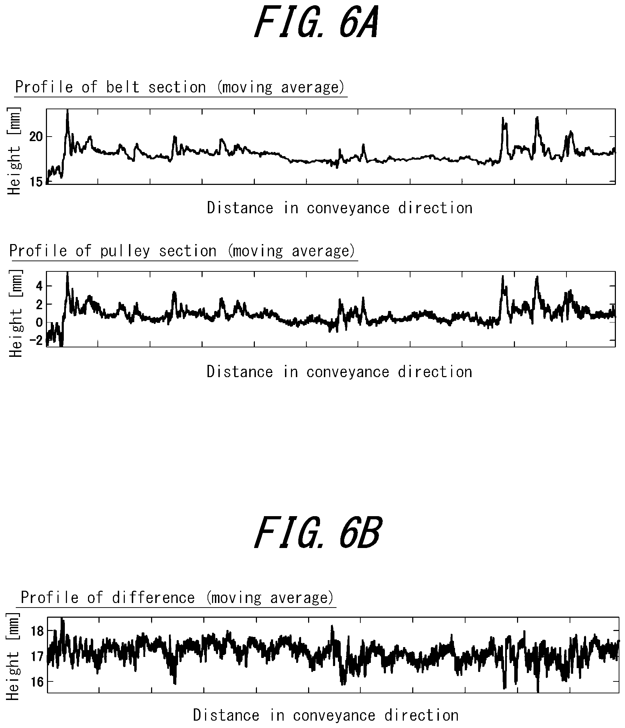

FIGS. 6A and 6B are diagrams illustrating a correction method in the case in which the pulley 20 has eccentricity (i.e., the center 22 is off). Due to the eccentricity of the pulley 20, the surface shape of the conveyor belt 30 becomes uneven in the conveyance direction (circumferential direction). Here, the distance in the conveyance direction on the horizontal axis indicates the position, in the conveyance direction, at which the surface shape (height) of the conveyor belt 30 is measured, in terms of distance from the reference position on the conveyor belt 30, and is indicated as a length between 0 and 1 lap (total circumferential length). FIG. 6A illustrates the respective surface shapes of the center position of the conveyor belt 30 in the width direction and both widthwise end positions of the pulley 20 before eccentricity correction as calculated by the control unit 15. The moving average of the surface shape (profile of the belt section) of the conveyor belt 30 at the widthwise center and the moving average of the surface shape (profile of the pulley section) at both widthwise end positions of the pulley 20 coincide. This means that the surface shape of the belt section is affected by the eccentricity of the pulley 20. The control unit 15 corrects for the effect of eccentricity of the pulley 20 by subtracting the profile of the pulley section from the profile of the belt section to calculate the difference, as illustrated in FIG. 6B. In the example in FIG. 6B, the range of variation in the surface shape of the conveyor belt 30 is approximately 2 mm. Compared to the approximately 8 mm variation in the surface shape of the conveyor belt 30 before eccentricity correction (FIG. 6A), the variation is much smaller, indicating that the surface shape of the conveyor belt 30 can be accurately measured by the correction. The control unit 15 can then accurately measure the thickness of the conveyor belt 30 based on the surface shape of the conveyor belt 30 obtained accurately by correction.

### <Belt Management Method>

Using the above-described surface shape measurement method, the conveyor belt 30 can be managed (monitored) based on the calculated surface shape of the conveyor belt 30. The surface shape measurement apparatus 10 determines whether the conveyor belt 30 is sufficiently thick based, for example, on the calculated surface shape of the conveyor belt 30. In a case of determining that the thickness is not sufficient, the surface shape measurement apparatus 10 can inform the operator of an abnormality in the conveyor belt 30 or stop the conveyor belt 30. In this way, management of the conveyor belt 30 based on the calculated surface shape of the conveyor belt 30 makes it possible accurately to detect abnormalities in the conveyor belt 30 and to respond promptly to abnormalities.

As described above, the surface shape measurement apparatus 10 and surface shape measurement method according to the present embodiment can accurately measure the thickness of the conveyor belt 30, since the above-described configuration and processes can remove the effect of inclination and eccentricity of the pulley 20. The belt management method according to the present embodiment also makes it possible accurately to determine the thickness of the conveyor belt 30 and to manage the conveyor belt 30 to prevent breakage or the like.

While embodiments of the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each step (process), or the like can be rearranged without logical inconsistency, and a plurality of components, steps, or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

In the above embodiment, the measurement target is the conveyor belt 30, but the measurement target is not limited to the conveyor belt 30. It suffices for the belt that is the measurement target to be a belt that is wound around the pulley 20.

### REFERENCE SIGNS LIST

- 1: Belt conveyor
- 10: Surface shape measurement apparatus
- 11: Belt surface measurement apparatus
- 12: Calculation apparatus
- 13: Conveyor belt operation information
- 14: Analysis apparatus
- 60: Control unit
- 20: Pulley
- 22: Center
- 30: Conveyor belt
- 31: Surface of conveyor belt
- 40: Holding member

## Claims

1. A surface shape measurement apparatus for measuring a surface shape of a belt wound around a pulley, the surface shape measurement apparatus comprising:
a belt surface measurement apparatus configured to measure a surface position of the belt and a surface position of the pulley at a section at which the belt contacts the pulley; and
a control unit configured to correct the surface position of the belt based on the measured surface position of the pulley and calculate the surface shape of the belt.

2. The surface shape measurement apparatus according to claim 1, wherein the belt surface measurement apparatus is configured to measure surface positions of both widthwise ends of the pulley, the widthwise ends being exposed from respective widthwise edges of the belt, and
the control unit is configured to estimate a surface position of a portion of the pulley other than the widthwise ends of the pulley from the surface positions of both widthwise ends of the pulley and correct the surface position of the belt based on the estimated surface position of the pulley.

3. The surface shape measurement apparatus according to claim 1 or 2, wherein the belt surface measurement apparatus is configured to measure a surface position of at least a total length of the belt in a conveyance direction.

4. The surface shape measurement apparatus according to any one of claims 1 to 3, wherein the control unit is configured to estimate an inclination of the pulley in a width direction from the surface position of the pulley and correct the surface position of the belt based on the inclination.

5. The surface shape measurement apparatus according to any one of claims 1 to 4, wherein the control unit is configured to estimate an eccentricity of the pulley in a circumferential direction from the surface position of the pulley and correct the surface position of the belt based on the eccentricity.

6. A surface shape measurement method for measuring a surface shape of a belt wound around a pulley, the surface shape measurement method comprising:
measuring a surface position of the belt and a surface position of the pulley at a section at which the belt contacts the pulley; and
correcting the surface position of the belt based on the measured surface position of the pulley and calculating the surface shape of the belt.

7. A belt management method comprising managing a belt based on a surface shape of the belt calculated by the surface shape measurement method according to claim 6.
